# EUROPEAN PATENT APPLICATION

(11) **EP 2 295 760 A2**
(43) Date of publication of application: **16.03.2011**
(21) Application number: 10174024.9
(22) Date of filing: 25.08.2010
(51) Int. Cl.: F02B 37/04, F02B 39/12

(54) **Twin-charged boosting system for internal combustion engines**

(30) Priority: 11.09.2009 US 557913
(71) Applicant: Delphi Technologies, Inc., Troy, MI 48007 (US)
(72) Inventor: Grieve, Malcom James, Fairport, NY 14450 (US)
(74) Representative: Denton, Michael John

(57) **Abstract**

A boost system (110,210) comprising a turbocharger (140), a supercharger (20) operable as either a compressor or an expander. Air flows through the turbocharger, optionally through a first charge air cooler CAC1 (146), then through the supercharger, a second charge air cooler CAC2 (144), and into the engine (16). At low engine speeds, the supercharger may be used to compress air, which is tempered by CAC2. At high engine speeds, the turbocharger has excess capacity, resulting in a hot compressed air stream. The supercharger operates as an expander to cool the air stream and reduce the air pressure and temperature to a desired level. Temperature may be reduced to a level below that desired for combustion; CAC2 then rewarms the air, thereby storing cooling capacity. A useful embodiment incorporates a turbocharger with a hybrid gas/electric or diesel/electric engine arrangement wherein a supercharger and a starter/generator/motor are disposed on a disconnectable secondary drive powered by the engine.

## Description

### TECHNICAL FIELD

The present invention relates to systems for boosting air flow into an internal combustion engine; more particularly, to boosting systems comprising both a turbocharger and a supercharger; and most particularly, to a combined turbocharger/supercharger boosting system to provide high-performance, high-efficiency engine operation over the full range of engine operating conditions and speeds.

### BACKGROUND OF THE INVENTION

In the effort to improve vehicle fuel economy while maintaining or improving vehicle power to weight ratios, many automotive OEMs are opting to downsize and turbocharge ("boost") their new direct injection gasoline engines. This is a continuation of a trend which has already led to nearly 100% penetration of turbocharger systems on automotive diesel engines. As used herein, the terms "boost" and "boosting" should be taken to mean an apparatus and/or method for providing combustion air to an internal combustion engine at a supra-atmospheric pressure.

One disadvantage of downsized, turbocharged engines is that the available torque at or near idle is very low (sometimes even lower than a naturally-aspirated engine of the same displacement). This leads to the well-known "turbo lag" and to the trend to waste gate, variable geometry turbine, and even two-stage series/sequential turbocharger systems to mitigate such poor low-RPM and transient performance.

One prior art engine system that overcomes low-RPM and transient performance has been put into volume production by Volkswagen® in a 1.4L "twin-charged" direct injection gasoline engine offered in several of their European models. This engine system uses a high speed ratio supercharger to supplement the turbocharger at low RPM as needed. The system then transitions to turbocharger-only operation, with the supercharger declutched, at high RPM.

Although, as noted above, the turbocharger is unable to boost an engine well at low RPM, the amount of available exhaust energy at high engine speed and load is often substantially above the level needed for boosting the engine. Therefore, a "waste gate", as the name implies, is often used at high engine speed and load to waste part of the exhaust energy by diverting a portion of the flow around the turbocharger turbine. A variable geometry turbine is somewhat more efficient, because it can modulate the kinetic energy of the exhaust at the turbine inlet; however, a variable geometry turbine tends to be more expensive and still suffers from some flow losses and thus still involves some level of parasitic energy loss in the system.

Another important aspect of engine boosting for both gasoline and diesel engines is charge-air cooling. Due to adiabatic compression, the compressed air temperature after a turbo-compressor or supercharger is significantly higher than ambient. An "intercooler", also known as a charge air cooler (CAC), typically is used to lower the temperature as much as possible to improve the volumetric efficiency and to reduce the propensity of engine "knock".

Air-to-air CACs, wherein compressed air is ducted to a heat exchanger at the very front of a vehicle, are widely used. Such an arrangement can offer low compressed air temperatures at the expense of some complexity in packaging and flow losses.

Coolant-to-air CACs tend be smaller and can be packaged more conveniently in or adjacent to the engine intake manifold to use the engine's coolant. However, the air temperature can approach only the coolant temperature of the engine, which normally is about 90°C and in extreme conditions may be as high as 125°C. One coolant-based approach is to use a secondary radiator only for the CAC, with a reservoir, pump and radiator separate from the normal engine cooling loop. This arrangement can produce intercooled charge temperatures of perhaps 40°C to 70°C under normal ambient conditions.

Future engine systems, both gasoline and diesel, will undoubtedly required even higher levels of boost than can be delivered by today's prior art systems. Staged, twin-turbo systems are known, and even three-turbomachine systems have been proposed for heavy duty vehicles, two for boost and one for energy recovery.

What is needed in the art is a more efficient "twin-charged" engine boosting system that can have the performance attributes of the aforementioned twin-charger system but with improved exhaust energy recovery, to mitigate the obvious high cost of such a system, and with improved charge cooling, to maintain performance in hot weather conditions and to facilitate the use of elevated levels of exhaust gas recirculation (EGR), consistent with future lower emission standards.

It is a principal object of the present invention to increase both the performance and the efficiency of an internal combustion engine.

### SUMMARY OF THE INVENTION

Briefly described, a boost system for an internal combustion in accordance with the present invention comprises a turbocharger driven conventionally by engine exhaust; a supercharger driven by the engine and capable of variable speed operation as either a compressor or an expander; an optional first charge air cooler (CAC1); and a second charge air cooler (CAC2). Combustion air enters the turbocharger, then flows in sequence through optional CAC1, the supercharger, CAC2, and thence into the engine.

At low engine and vehicle speeds, when additional boosting is needed, the supercharger is rotated at a high speed relative to the engine. It draws and compresses air, which then is tempered by CAC2 before passing into the engine. The turbocharger contributes relatively little at very low RPM, the engine boosting coming from action of the supercharger.

As engine speed and exhaust volume increase, the turbocharger begins to significantly compress the incoming air. The air is tempered principally by CAC1, and the supercharger and CAC2 contribute only modestly to the engine boosting and intercooling.

At high engine speeds and high exhaust volume, such as when cruising on an interstate highway, the turbocharger capacity may substantially exceed the compressed air requirement, and engine boosting comes exclusively from the turbocharger. In the prior art, the excess capacity is dumped and thereby wasted as via a waste gate. This results in unnecessary backpressure in the engine exhaust. In the present invention, this extra compressive capacity is recovered and stored as follows.

The speed of the supercharger is reduced such that the supercharger operates as an adiabatic expander to cool the air stream and reduce the intake air pressure to a desired level. Preferably, the air temperature is reduced to a level below that desired for combustion. CAC2 then serves to rewarm the air by its heat capacity or optionally by the condensation of a refrigerant, thereby storing cooling capacity in CAC2 for use during the next period of supercharger boosting, and thus improving the cooling of the supercharger output.

The invention is also useful in an embodiment incorporating a turbocharger with a prior art hybrid gas/electric or diesel/electric engine arrangement wherein a supercharger and a starter/generator/motor are disposed on a disconnectable secondary drive means powered by the engine. This embodiment overcomes efficiency penalties of the prior art arrangement wherein the supercharger alone is responsible for engine boosting at high speed and load.

### BRIEF DESCRIPTION OF THE DRAWINGS

The present invention will now be described, by way of example, with reference to the accompanying drawings, in which:
FIG. 1 is a schematic drawing of a prior art supercharger system, without turbocharger, for stop/start hybrid operation of an internal combustion engine, substantially as disclosed in incorporated reference PCT/US09/02364;
FIG. 2 is a schematic drawing showing the prior art system in FIG. 1 adapted as a first embodiment of a twin-charged boosting system in accordance with the present invention; and
FIG. 3 is a schematic drawing of a generic twin-charged boosting system in accordance with the present invention.

Corresponding reference characters indicate corresponding parts throughout the several views. The exemplifications set out herein illustrate currently preferred embodiments of the invention, and such exemplifications are not to be construed as limiting the scope of the invention in any manner.

### DESCRIPTION OF THE PREFERRED EMBODIMENTS

Various concepts are known in the prior art for recovering energy from engine exhaust. The present invention moves the energy recovery to the air intake, thereby reducing the overall cost of components and sharing components with the supercharger and charge air cooling functions. Additional value is received in improved charge cooling, which improves knock-limited power, and/or reduced power parasitics for accessories such as air conditioning. Cooling of the CAC2 thermal storage mass in normal driving allows subsequent excellent transient cooling performance because the CAC2 thermal mass and, optionally, the refrigerant or phase-change material (PCM) keeps air charge temperature low in temporary high-boost supercharged conditions. The option of active cooling using a refrigerant, fuel, or low-temperature loop coolant with a secondary radiator can be useful for extreme hot weather conditions. The charge cooling benefits make the present system attractive for clean diesel engines of the future because very low air charge temperature allows for a desirably very high level of exhaust gas recirculation (EGR).

A twin-charged engine boost system in accordance with the present invention allows extreme downsizing of an engine, either gasoline or diesel, without compromising performance and efficiency over the entire range of engine load and operating conditions.

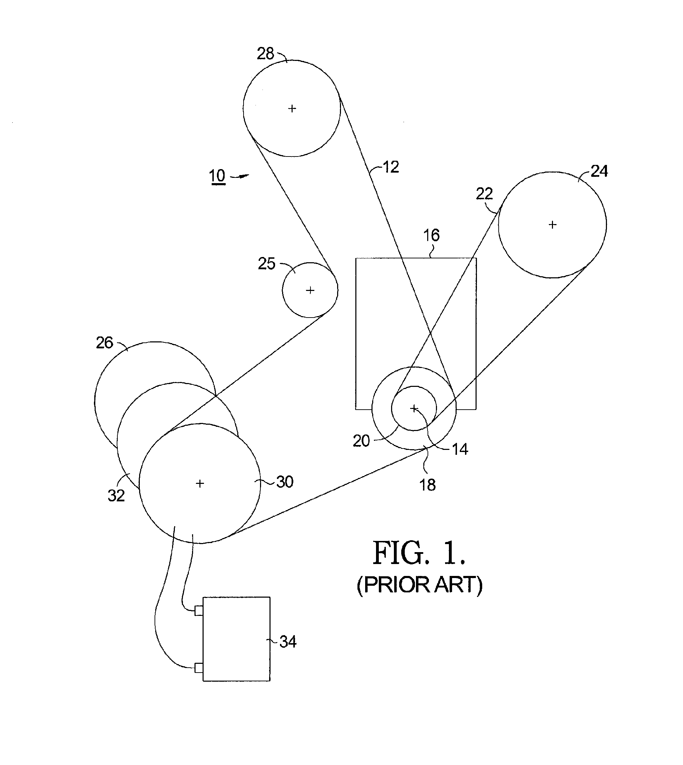

Referring to FIG. 1, a prior art supercharger system 10 is shown, for stop/start hybrid operation of an internal combustion engine, substantially as disclosed in incorporated reference PCT/US09/02364.

System 10 comprises a secondary drive means 12 such as a belt, chain, or direct coupling that is operationally connected to the crankshaft 14 of an internal combustion engine 16. Secondary drive means 12 may be driven directly via a clutch 18 to permit automatic selective drive of the secondary drive means 12 by the engine control system (not shown). Preferably clutch 18 comprises at least an active (on/off) clutch, and preferably also a passive (so-called "over-running") clutch. Clutch 18 is mounted directly on the end of crankshaft 14, along with a pulley damper 20 for driving a primary drive means 22 such as a primary belt or chain at a fixed ratio to engine speed.

An "over-running" clutch refers to a clutch between two rotatable elements that latches and unlatches with relative rotation of the input and output elements. If the input element, in the present case connected to engine 16, is at the speed of the output element, connected to supercharger secondary drive means 12, the clutch latches. If the engine is turning slower than secondary drive means 12, the clutch freewheels, allowing secondary drive means 12 to run faster than synchronous with engine 16. Thus, for engine 16 to be driven by system 10 as in starting mode, an additional, on/off clutch is required (also referred to herein as an "active" clutch). The two clutches are not in series but may be on different elements of a planetary gear set, as is known in the prior art.

In the present discussion, the term "primary" should be taken to mean comprising an apparatus 24 either necessary to the functioning of the engine or which needs to rotate at a fixed ratio to the engine speed, e.g., a water pump. "Secondary" should be taken to mean comprising an apparatus either non-essential to the functioning of the engine or which needs to rotate at a speed independent of engine speed, e.g., supercharger 26, HVAC compressor 28, or power steering (not shown) and power brakes (not shown) which may be optionally included in system 10. Also a belt tensioner 25 and one or more idler pulleys (not shown) may be used (as in the prior art).

System 10 further includes a low-inertia starter/motor/generator 30 having a wide speed range, driven by the secondary drive means 12. Supercharger 26 is driven by starter/motor/generator 30, either directly (preferred) or via an intermediate linkage such as an additional belt (not shown). The starter/motor/generator may be electric, hydraulic, or pneumatic or combinations thereof. The system also includes an energy storage device 34, such as a battery, ultracapacitor, hydraulic or pneumatic accumulator, or combinations thereof.

Two-speed (active, plus passive over-running) clutch 18 allows system 10 to turn in three modes:
1. at a fixed multiple of engine speed (when the engine is "ON" and the overrunning clutch latches), for example when the engine is in "cruise" mode.
2. at a fixed higher multiple of engine speed (when the active clutch is "ON"), for example, when the engine is being supercharged.
3. at a variable speed, independent of the engine, when the active clutch is "OFF" and the engine is "OFF" or running at a lower speed than the supercharger system.

The supercharger device 26 may be a turbo-compressor (centrifugal, axial, or mixed flow, i.e. the cold side of a turbocharger) or a Roots® blower, or scroll or Lysholm® compressor. In the case of a turbo-compressor, a high ratio drive 32 is required to spin the compressor at a very high speed (compared to the secondary belt drive 12). This may be with a gear set or a roller traction drive. In the case of the other supercharger technologies, a more moderate step up drive may be used or the device may run at the same speed as its secondary drive.

The system has a large cost benefit, by using a single starter/motor/generator device 30 (and associated controls) to do multiple functions. For example, in the case of an electric starter/motor/generator, this starter/motor/generator can do:
- engine starting (both for initial cold start and subsequent stopstart cycles),
- steady state (low power) generating to run accessories and keep a SLI battery
   charged,
   hybrid electric functions (torque assist and regenerative braking) using the ultracapacitor or other high power energy storage 34 to source or sink the required power,
- engine independent boosting, and
- engine independent air conditioning.

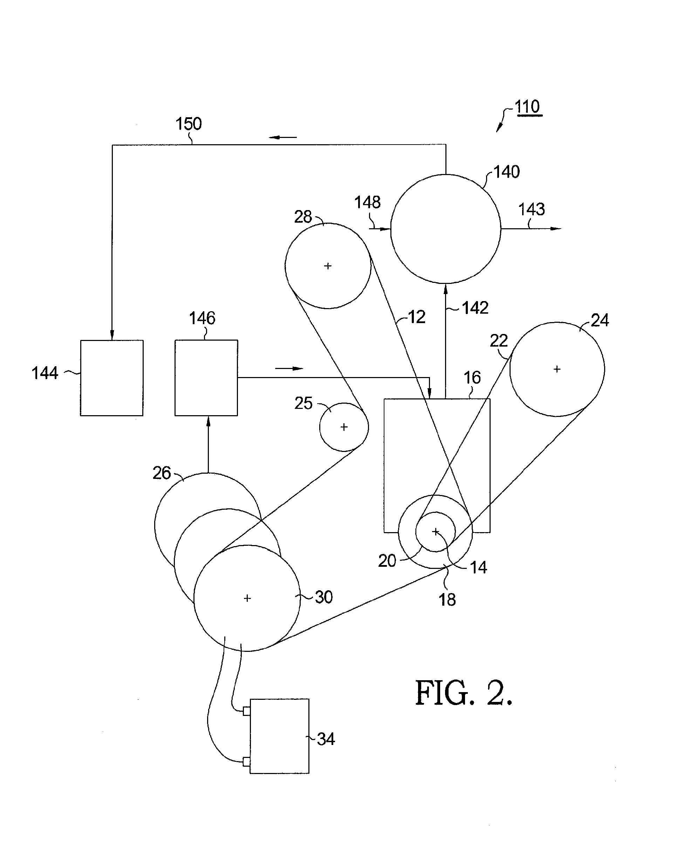

Referring to FIG. 2, a first embodiment 110 of a high-performance, high-efficiency twin-charged boosting system in accordance with the present invention for a hybrid-operated engine incorporates all the elements of system 10, shown in FIG. 1. In addition, system 110 comprises a turbocharger 140 driven conventionally by engine exhaust 142 which is then discharged 143; a first charge air cooler (CAC1) 144; and a second charge air cooler (CAC2) 146. Combustion intake air 148 enters turbocharger 140 and is compressed and heated, then flows 150 in sequence through CAC1 144, supercharger 26, CAC2 146, and thence into engine 16.

By switching or modulating the speed of supercharger 26 and optionally (depending on the type of supercharger) by switching the direction of flow or porting of the supercharger, the function can be switched between operation as a compressor or expander. In system 10 (FIG. 1), for example, supercharger 26 is arranged with an on/off or variable speed accessory drive or clutch 18. The high speed is defined by operation in highly boosted modes, whereas the freewheeling speed (declutched from the engine) or low speed can be set to have the supercharger act as an expander. The operation as an expander is useful in unboosted conditions (for recovering intake throttling losses) or when the capacity of the turbocharger exceeds the engine flow requirement (for reducing wastegate losses).

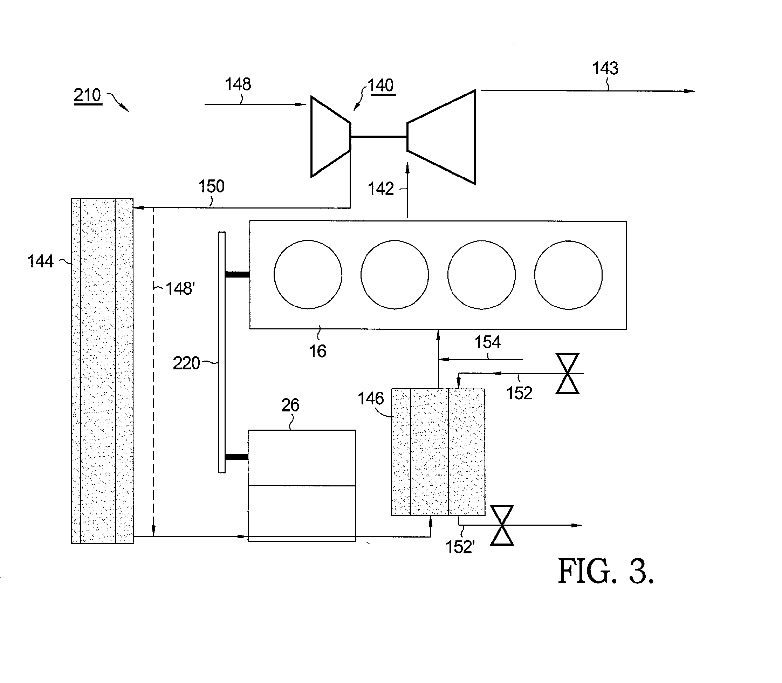

Referring to FIG. 3, a non-hybrid, high-performance, high-efficiency twin-charged boosting system 210 in accordance with the present invention for boosting an internal combustion engine 16 comprises a turbocharger 140 driven conventionally by engine exhaust 142 which is then exhausted 143; a supercharger 26 driven by engine 16 via at least a two-speed variable drive 220 and capable of variable speed operation, such that supercharger 26 is capable of acting as either a compressor or an expander as described below (appropriate valving not shown); a first charge air cooler (CAC1) 144; and a second charge air cooler (CAC2) 146. Combustion intake air 148 enters turbocharger 140, then compressed air 150 flows in sequence through CAC1 144, supercharger 26, CAC2 146, and thence into engine 16.

Although several types of supercharger devices and valving strategies can be used, a Roots® blower should be considered a preferred technology, because it tends to have high efficiency at modest pressures ratios (where it would normally be used) both as a compressor and expander and the flow direction and porting can remain unchanged. In normal boost operation, the Roots® blower is turned much faster than the engine, forcing air into the intake manifold and thus increasing the manifold pressure. By operating the Roots® blower much slower than the engine, a pressure drop across the Roots® blower causes a reverse to normal torque which may be used to power accessories (not shown), turn the generator (not shown) or to provide a small power increase to the engine (via the accessory belt or a similar chain or gears, not shown).

A variety of layouts and charge air cooling strategies may be used in accordance with the present invention, but in one aspect of the invention, turbocharger 140 compresses filtered intake air 148; and CAC1 144, which typically is an air/air CAC, drops the charge air temperature as low as possible. In cruise conditions, for example, with system 210 operating in mid-boost, cruise, or light acceleration modes, turbocharger 140 may compress air 148 to as much as about 3.0 bar. Supercharger 26 then partly expands the charge air to, for example, 2.032 bar, resulting in a lower temperature. By modulating the level of bypass 148' around CAC1 144, the resulting temperature can be precisely controlled to match the level required to condense a refrigerant or freeze a phase change material (or both) in CAC2 146, thereby storing capacity for future cooling in CAC2 146 or to supplement vehicle cabin air conditioning. This level can also be chosen so as to not condense water from the ambient humidity, and especially from EGR 154 which may be mixed into the charge air.

By bypassing 148' all of the flow around CAC1 144, hotter gas from turbocharger 140 is expand through supercharger 26, resulting in somewhat higher energy recovery. Then active cooling of CAC2 146 may be needed to maintain a low charge temperature to the engine. This can be useful, for example, in certain ambients where active cooling can be achieved with a very low parasitic by circulating refrigerant 152.

The use of supercharger 26 as an expander allows very low temperatures of the air charge as admitted to engine 16, which is attractive for knock-limited power and efficiency, and which helps to match the turbine power and compressor load in the turbocharger, thereby reducing or eliminating the losses associated with a waste gate or VGT.

When a high level of boost is required, especially at low engine RPM where the turbocharger is inherently inefficient and underpowered, accessory drive 220 can switch back to normal supercharger operation. Because vaporized refrigerant 152 has been condensed and/or phase change material has solidified 152' in the preceding low-load operation, the very low charge air temperatures can be maintained with minimal parasitic losses. If continuous cooling is required, a small amount of refrigerant from a vehicle air conditioning compressor (not shown) can be metered into CAC2 146, acting then as an evaporative heat exchanger.

It will be seen that system 110, 210 allows enhanced energy recovery from the turbocharger without the need for extensive additional hardware in the exhaust system. The resulting fuel economy benefits are relatively small but are additive to the more substantial baseline benefits achieved in the highly downsized twin-charger architecture. The fuel economy gains can be achieved with simple hardware changes, such as accessory drive 220, and thus have an attractive cost/benefit. The improved charge air cooling and flexibility to manage hot and cold ambient conditions is another advantage, allowing the present novel system to be responsive and efficient in different climatic conditions and with varying fuels.

The ability to control efficiently CAC2 146 to near the dew point will be useful in future engine systems employing very high EGR flow, needed for both diesel and gasoline engines, with improved ability to material solidified
meet future extremely low emissions standards without compromising engine efficiency.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A twin-charged boosting system (110, 210) for boosting an internal combustion engine (16), the system (110, 210) comprising a supercharger (26) and being **characterized in that** it further comprises:
a turbocharger (140) driven by exhaust (142) from said engine (16) and capable of taking in combustion air to form an air charge for said engine (16);
a variable-speed drive operationally connecting said supercharger (26) to said engine (16) such that said supercharger (26) is driven by said engine (16) as either a compressor or an expander; and
one charge air cooler (146) disposed between said supercharger (26) and an inlet to said engine (16).

2. A system (110, 210) in accordance with Claim 1 further comprising another charge air cooler (144) disposed between said turbocharger (140) and said supercharger (26).

3. A system (110, 210) in accordance with Claim 2 wherein at least a portion (148') of said air charge (150) passing from said turbocharger (140) to said supercharger (26) bypasses said another charge air cooler (144).

4. A system (110, 210) in accordance with any of the preceding claim wherein said supercharger (26) is operated as a compressor (28) when said engine (16) requires additional boosting beyond the capacity of said turbocharger (140).

5. A system (110, 210) in accordance with any of the preceding claim wherein said supercharger (26) is operated as an expander when said engine (16) is running at less than boosted conditions or at torque level that is less than the capacity of said turbocharger (140).

6. A system (110, 210) in accordance with Claim 5 wherein the temperature of said air charge when exiting said supercharger (26) is lower than desired for combustion in said engine (16).

7. A system (110, 210) in accordance with any of the preceding claim wherein supercharger (26) is selected from the group consisting of turbo-compressor, centrifugal, axial, or mixed flow, scroll.

8. A twin-charged boosting system (110, 210) in accordance with Claim 1 further comprising:
a clutch operationally connected to said engine (16), said clutch including an active clutch portion that can be selectively opened or closed;
a starter/motor/generator operationally connected to said supercharger;
a drive element connecting said supercharger, said clutch, and said starter/motor/generator (220); and
wherein said clutch is disposed in a position selected from the group consisting of directly on the crankshaft of said engine (16), on an accessory drive element of said engine, and on a rotating element in the drive line which is normally connected to the output shaft of said engine,
wherein said system (210) is coupled mechanically to said engine (16) when said active clutch portion is closed, and
wherein said system (210) is decoupled mechanically from said engine (16) and may be driven by said starter/motor/generator when said active clutch portion is open,
and so the twin-charged boosting system (210) is able to boost a hybrid-operating internal combustion engine (16),

9. A system (110, 210) in accordance with Claim 8 further comprising another charge air cooler (144) disposed between said turbocharger (140) and said supercharger (26).

10. A system (110, 210) in accordance with Claim 8 wherein said system (110, 210) further comprises an energy source (34) operationally connected to said starter/motor/generator device (30).

11. A method for operating a system (110, 210) including the elements of Claim 1, comprising the steps of:
a) compressing and heating a combustion air charge in said turbocharger (140) to a pressure and temperature above ambient;
b) passing said air charge through said supercharger (26); and
c) passing said air charge through said one charge air cooler (146) to temper said air charge for entry into said engine (16).

12. A method in accordance with Claim 11 wherein said supercharger (26) is operated as a compressor, and wherein the temperature of said air charge at exit from said supercharger (26) is higher than the intended combustion air temperature for said engine (16), and wherein said air tempering in passing through said one charge air cooler (146) is a cooling operation.

13. A method in accordance any of the claim 11 or 12 wherein said twin-charged boosting system (210) includes another charge air cooler (144) disposed between said turbocharger (140) and said supercharger (26), said method comprising the further step of :
passing at least part of said air charge through said one charge air cooler (144) after exit from said turbocharger (140) and before entry into said supercharger (26).

14. A method in accordance any of the claim 11 to 13 wherein said supercharger (26) is operated as an expander, and wherein the temperature of said air charge at exit from said supercharger (26) is lower than the intended combustion air temperature for said engine (16), and wherein said air tempering in passing through said one charge air cooler (146) is a warming operation.
